Europäisches Patentamt

European Patent Office

Office européen des brevets

(11) Veröffentlichungsnummer: **0 417 566 A1**

# (12) EUROPÄISCHE PATENTANMELDUNG

(21) Anmeldenummer: 90116725.4

(22) Anmeldetag: 31.08.90

(51) Int. Cl.⁵: **F16M 11/14, F16C 11/10**

(30) Priorität: 09.09.89 DE 8910801 U

(43) Veröffentlichungstag der Anmeldung:
20.03.91 Patentblatt 91/12

(84) Benannte Vertragsstaaten:
AT BE CH DE DK ES FR GB IT LI NL SE

(71) Anmelder: Franz Sachs & Co KG
Oberhofer Strasse 18
W-7992 Tettnang(DE)

(72) Erfinder: Schulz, Peter
Oberhofer Strasse 18
W-7992 Tettnang(DE)
Erfinder: Stusak, Hans
Salzweg
W-7992 Tettnang(DE)

(74) Vertreter: Engelhardt, Guido, Dipl.-Ing.
Patentanwalt Montafonstrasse 35 Postfach
1350
W-7990 Friedrichshafen 1(DE)

(54) **Kugelgelenk.**

(57) Bei einem Kugelgelenk (1) für zwei miteinander zu verbindende Bauteile (3, 4) sind in einem hülsenartig ausgebildeten Gehäuse (11) diametral einander gegenüberliegend, zwei Kugeln (21, 22) begrenzt verdrehbar gehalten, die an den Enden der miteinander zu verbindenden Bauteile (3, 4) angebracht sind. Außerdem sind zwischen den beiden Kugeln (21, 22) zwei in Richtung der Längsachse A des Gehäuses 11 verschiebbare Druckstücke eingesetzt, mittels denen die Kugeln (21, 22) gemeinsam in dem Gehäuse verspannbar sind.

Durch diese Ausgestaltung wird ein Kugelgelenk (1) geschaffen, das einen großen Verstellbereich aufweist und mittels dem auch hohe Kräfte übertragbar sind. Dennoch ist eine stets sichere Verspannung gewährleistet.

FIG. 1

# KUGELGELENK

Die Neuerung bezieht sich auf ein Kugelgelenk für zwei miteinander zu verbindende Bauteile, das durch ein Spannmittel feststellbar ist und ist insbesondere für einen ein Modell oder dgl. aufnehmenden an einer Tischplatte abstützbaren stangenförmigen und verstellbaren Träger verwendbar.

Kugelgelenke dieser Art bestehen aus einer an einem der durch diese miteinander verbundenen Bauteile angebrachten Kugel und einem an dem anderen Bauteil befestigten Lager sowie einem verdrehbar in diesem auf einer Welle angeordneten Exzenter als Spannmittel, mittels dem durch Verdrehung zur Fixierung des Kugelgelenkes die Kugel gegen das Lager preßbar ist. Der Bauaufwand dieser Kugelgelenke ist zwar gering, der Bereich, in dem diese eine Verstellung der durch das Kugelgelenk miteinander verbundenen Bauteile zulassen, ist jedoch klein bemessen, da die Kugel in dem Lager nur begrenzt verdrehbar ist. Des weiteren kann durch unvermeidbare Fertigungstoleranzen die Funktion des Kugelgelenkes beeinträchtigt werden, da mitunter eine ausreichende Verspannung der Kugel in dem Lager nicht mehr gewährleistet ist. Zur Halterung von schweren Werkstücken sind daher die bekannten Kugelgelenke nicht einsetzbar.

Aufgabe der Neuerung ist es demnach, ein verspannbares Kugelgelenk zu schaffen, das nicht nur einen großen Verstellbereich aufweist, so daß die über dieses miteinander verbundenen Bauteile über große Wegstrecken gegeneinander verstellt werden können, sondern mittels dem auch hohe Kräfte übertragbar sind und das stets sicher verspannbar ist. Der dazu erforderliche Bauaufwand soll verhältnismäßig gering gehalten werden, auch sollen eine stets zufriedenstellende Funktion sowie eine lange Lebensdauer gegeben sein.

Gemäß der Neuerung wird dies dadurch erreicht, daß in einem hülsenartig ausgebildeten Gehäuse diametral einander gegenüberliegend zwei Kugeln begrenzt verdrehbar gehalten sind, die an den Enden der miteinander zu verbindenden Bauteile angebracht sind, und daß zwischen den beiden Kugeln zwei in Richtung der Längsachse des Gehäuses verschiebbare Druckstücke eingesetzt sind, mittels denen die Kugeln gemeinsam in dem Gehäuse verspannbar sind.

Zur Betätigung der Druckstücke ist es angebracht, auf einer das Gehäuse senkrecht zu dessen Längsachse durchgreifenden Führungsstange einander gegenüberliegend zwei in dem Gehäuse verschiebbar geführte Klemmstücke anzuordnen, die jeweils mit einander zugekehrten kegelförmigen mit an den Druckstücken angebrachten Gegenflächen zusammenwirkenden Klemmflächen versehen sind, das erste Klemmstück drehfest zu halten und mit einem Innengewinde auszustatten, in die die Führungsstange mit einem Außengewinde eingeschraubt ist, und an dem anderen Ende der Führungsstange ein Griffstück anzubringen, an dem z. B. über einen Druck- oder Distanzring das zweite Klemmstück abgestützt ist.

Zweckmäßig ist es hierbei des weiteren, das erste Klemmstück mittels eines in diesem eingesetzten achssenkrecht gerichteten Stiftes oder dgl., der in eine in das Gehäuse eingearbeitete schlitzartige Freisparung eingreift, drehfest zu halten und das Gehäuse, um auf einfache Weise die Kugeln in dieses einsetzen zu können, aus zwei jeweils mit einer ringförmigen Lagerfläche für die beiden Kugeln versehene Hülsen zusammenzusetzen, die über ein Gewinde miteinander verschraubt sind.

Vorteilhaft ist es auch, die Kugeln jeweils mit einem angeformten Zapfen zu versehen, die mittels eines Gewindeansatzes in die zu verbindenden Bauteile einschraubbar sind, das Gehäuse im Bereich einer oder beider Kugeln mit einer oder mehreren Aussparungen zur Aufnahme der an den Kugeln angeformten Zapfen auszustatten und in die Druckstücke eine ringförmig ausgebildete Lagerfläche zur Abstützung der Kugeln einzuarbeiten.

Wird ein Kugelgelenk der Neuerung ausgebildet, so ist es möglich, die über dieses miteinander verbundenen Bauteile in einem großen Bereich zu verstellen, aber dennoch starr und zuverlässig zu verbinden. Werden nämlich in einem Gehäuse zwei Kugeln eingesetzt, die gemeinsam mittels radial verschiebbarer Druckstücke verspannbar sind, so ist zumindest der doppelte Verstellbereich gegenüber einem Kugelgelenk mit nur einer Kugel gegeben. Und da die auf die Kugeln einwirkenden Druckstücke mittels einer mit Klemmstücken versehenen Gewindespindel betätigbar sind, werden nicht nur Fertigungstoleranzen problemlos ausgeglichen, sondern es kann auch eine stets ausreichende Verspannung der Kugeln in dem Gehäuse vorgenommen werden, so daß mittels des vorschlagsgemäß ausgebildeten Kugelgelenkes auch hohe Kräfte zu übertragen sind. Trotz geringen Bauaufwandes ist somit bei einfacher Handhabung, da beiden Kugeln in kurzer Zeit gemeinsam verspannbar sind, eine sehr vielseitige Verwendbarkeit gegeben.

In der Zeichnung ist ein Ausführungsbeispiel des gemäß der Neuerung ausgebildeten Kugelgelenkes dargestellt, das nachfolgend im einzelnen erläutert ist. Hierbei zeigt:

Figur 1 das zwischen zwei Bauteilen eingesetzte Kugelgelenk in Ansicht und

Figur 2 das Kugelgelenk nach Figur 1 in einem Längsschnitt.

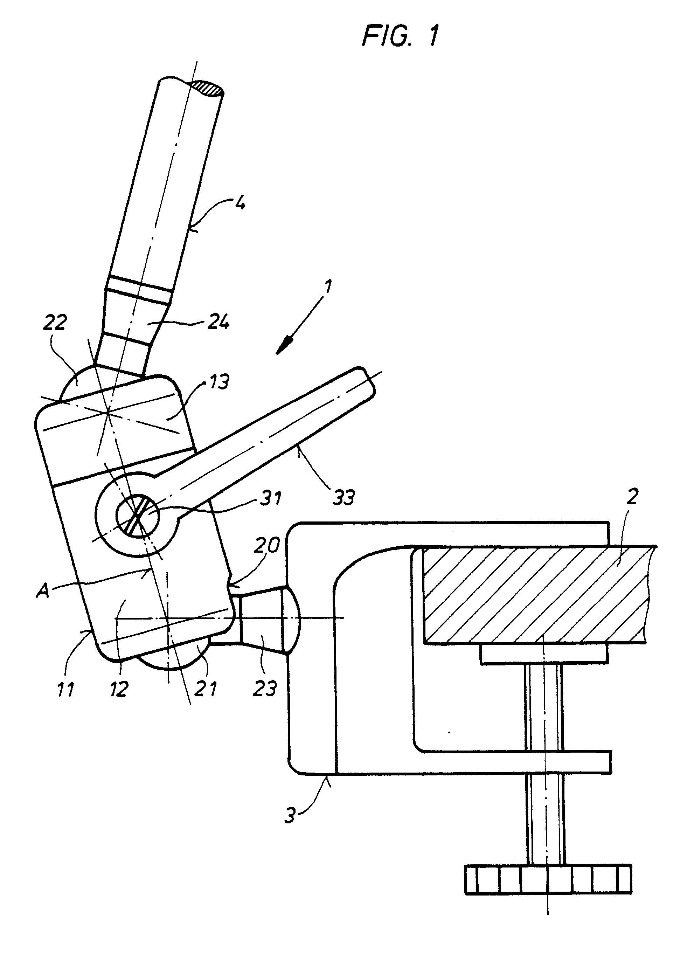

Das in Figur 1 dargestellte und mit 1 bezeichnete Kugelgelenk dient zur gelenkigen Verbindung zweier Bauteile, beispielsweise einer an einer Tischplatte 2 angebrachten Zwinge 3 mit einem stangenförmigen Träger 4, an dem z. B. ein Modell in Form eines Phantomkopfes oder dgl. aufgesetzt ist und ermöglicht es, den Träger 4 über einen außerordentlich großen Bereich zu verstellen, aber dennoch sicher mit der Zwinge 3 zu verbinden.

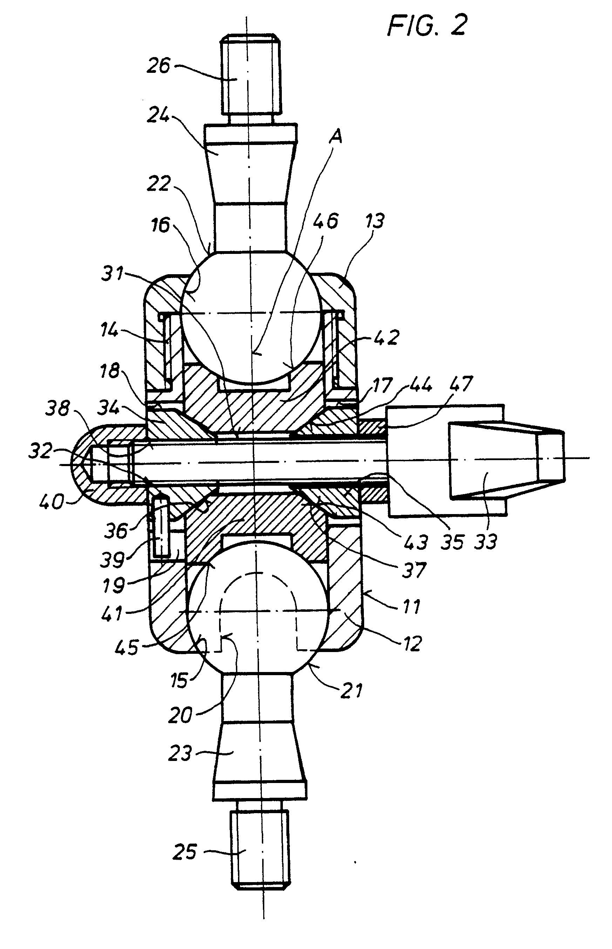

Dazu sind, wie dies insbesondere der Figur 2 entnommen werden kann, in einem Gehäuse 11 diametral einander gegenüberliegend zwei Kugeln 21 und 22 eingesetzt, die gemeinsam mit Hilfe von Druckstücken 41 und 42 mit dem Gehäuse 11 verspannbar sind. Zur Betätigung der Druckstücke 41 und 42 sind auf einer das Gehäuse 11 durchgreifenden Führungsstange 31 angeordnete Klemmstücke 34 und 35 vorgesehen, die über Klemmflächen 36 und 37 auf an den Druckstücken 41 und 42 angearbeitete Gegenflächen 43 und 44 einwirken.

Das Gehäuse 11 ist bei dem gezeigten Ausführungsbeispiel, um die Kugeln 21 und 22 leicht in dieses einführen zu können, aus zwei Hülsen 12 und 13 zusammengesetzt, die über ein Gewinde 14 miteinander verschraubt sind und jeweils eine Lagerfläche 15 bzw. 16 für die Kugeln 21 bzw. 22 aufweisen. Des weiteren sind in die Hülse 12 zwei senkrecht zur Längsachse A des Gehäuses 11 verlaufende Ausnehmungen 17 und 18 eingearbeitet, in denen die Klemmstücke 34 und 35 verschiebbar geführt sind.

Die Führungsstange 31 ist mit einem Außengewinde 32 versehen, das in ein in das drehfest gehaltene erste Klemmstück 34 eingearbeitetes Innengewinde 38 eingreift. Zur verdrehfesten Lagerung des ersten Klemmstückes 34 dient ein radial abstehender Stift 39, der in einer schlitzartigen Freisparung 19 der Hülse 12 abgestützt ist. An dem anderen Ende der Führungsstange 31 ist ein Griffstück 33 befestigt, mittels dem diese verdrehbar und somit in dem Innengewinde 38 verschraubbar ist. Das zweite Klemmstück 35 ist dabei über einen Druck-oder Distanzring 47 an dem Griffstück 32 abgestützt. Auf das aus dem Gehäuse 11 ragende Ende der Führungsstange 31 ist eine Abschlußkappe 40 aufgeschraubt.

Die Druckstücke 41 und 42 sind ebenfalls mit ringförmigen Lagerflächen 45 und 46 ausgestattet, an denen die Kugeln 21 und 22 abgestützt sind. Und diese weisen jeweils einen abstehenden Zapfen 23 bzw. 24 auf, die mit Hilfe von angearbeiteten Gewindeansätzen 25 und 26 in die Zwinge 3 bzw. den Träger 4 einschraubbar sind.

Wird das Griffstück 32 in der Weise verdreht, daß die Führungsstange 31 in das Klemmstück 34 eingeschraubt wird, so werden die beiden Klemmstücke 34 und 35 nach innen verstellt und somit die Druckstücke 41 und 42 in Richtung der Längsachse A des Gehäuses 11 nach außen verschoben, so daß die Kugeln 21 und 22 zwischen den Druckstücken 41 und 42 sowie den Hülsen 12 und 13 eingespannt werden. Zum Feststellen bzw. zum Lösen des mit den beiden Kugeln 21 und 22 ausgestatteten Kugelgelenkes 1 ist somit nur das Griffstück 33 entsprechend zu verdrehen.

Die Hülse 12 des Gehäuses 11 ist des weiteren im Bereich der Kugel 21 mit einer Aussparung 20 versehen, die dem Zapfen 23 angepaßt ist. Auf diese Weise kann dieser, wie dies in Figur 1 gezeigt ist, auch seitlich aus dem Gehäuse 11 herausgeführt und das Kugelgelenk 1 senkrecht zu dessen Längsachse A an der Zwinge 3 befestigt werden. Selbstverständlich können in der Hülse 12 wie auch in der Hülse 13 weitere derartige Aussparungen vorgesehen werden.

## Ansprüche

1. Kugelgelenk für zwei miteinander zu verbindende Bauteile, beispielsweise für einen ein Modell oder dgl. aufnehmenden, an einer Tischplatte abstützbaren stangenförmigen und verstellbaren Träger, das durch ein Spannmittel feststellbar ist, **dadurch gekennzeichnet,** daß in einem hülsenartig ausgebildeten Gehäuse (11) diametral einander gegenüberliegend zwei Kugeln (21, 22) begrenzt verdrehbar gehalten sind, die an den Enden der miteinander zu verbindenden Bauteile (Zwinge 3, Stange 4) angebracht sind, und daß zwischen den beiden Kugeln (21, 22) zwei in Richtung der Längsachse A des Gehäuses (11) verschiebbare Druckstücke (41, 42) eingesetzt sind, mittels denen die Kugeln (21, 22) gemeinsam in dem Gehäuse (11) verspannbar sind.

2. Kugelgelenk nach Anspruch 1, **dadurch gekennzeichnet,** daß zur Betätigung der Druckstücke (41, 42) auf einer das Gehäuse (11) senkrecht zu dessen Längsachse (A) durchgreifenden Führungsstange (31) einander gegenüberliegend zwei in dem Gehäuse (11) verschiebbar geführte Klemmstücke (34, 35) angeordnet sind, die jeweils mit einander zugekehrten kegelförmigen mit an den Druckstükken (41, 42) angebrachten Gegenflächen (43, 44) zusammenwirkenden Klemmflächen (36, 37) versehen sind, daß das erste Klemmstück (34) drehfest gehalten ist und ein Innengewinde (39) aufweist, in die die Führungsstange (31) mit einem Außengewinde (32) eingeschraubt ist, und daß an dem anderen Ende der Führungsstange (31) ein Griffstück (33) angebracht ist, an dem z. B. über einen Druck- oder Distanzring (47) das zweite Klemmstück (35) abgestützt ist.

3. Kugelgelenk nach Anspruch 2,

**dadurch gekennzeichnet,**

daß das erste Klemmstück (34) mittels eines in dieses eingesetzten achssenkrecht gerichteten Stiftes (40) oder dgl., der in eine in das Gehäuse (11) eingearbeitete schlitzartige Freisparungen (19) eingreift, drehfest gehalten ist.

4. Kugelgelenk nach einem oder mehreren der Ansprüche 1 bis 3,

**dadurch gekennzeichnet,**

daß das Gehäuse (11) aus zwei jeweils mit einer ringförmigen Lagerfläche (15, 16) für die beiden Kugeln (21, 22) versehene Hülsen (12, 13) besteht, die über ein Gewinde (14) miteinander verschraubt sind.

5. Kugelgelenk nach einem oder mehreren der Ansprüche 1 bis 4,

**dadurch gekennzeichnet,**

daß die Kugeln (21, 22) jeweils mit einem angeformten Zapfen (23, 24) versehen sind, die mittels eines Gewindeansatzes (25, 26) in die zu verbindenden Bauteile (Zwinge 3, Stange 4) einschraubbar sind.

6. Kugelgelenk nach einem oder mehreren der Ansprüche 1 bis 5,

**dadurch gekennzeichnet,**

daß das Gehäuse (11) im Bereich einer oder beider Kugeln (21, 22) jeweils mit einer oder mehreren Aussparungen (20) zur Aufnahme der an den Kugeln (21, 22) angeformten Zapfen (23, 24) versehen ist.

7. Kugelgelenk nach einem oder mehreren der Ansprüche 1 bis 6,

**dadurch gekennzeichnet,**

daß die Druckstücke (41, 42) jeweils mit einer ringförmig ausgebildeten Lagerfläche (45, 46) zur Abstützung der Kugeln (21, 22) versehen sind.

## FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 650 788  (HULSTEIN)<br>* Insgesamt *<br>— — — | 1,2,4,7 | F 16 M 11/14<br>F 16 C 11/10 |
| Y | GB-A-6 886 85  (LAMBERT)<br>* Seite 2, Zeilen 88-103; Figuren 1-3 *<br>— — — | 1,2,4,7 | |
| Y | GB-A-8 191 03  (MERLE)<br>* Insgesamt *<br>— — — | 1,5,7 | |
| Y | DE-C-1 006 254  (VOIGTLÄNDER)<br>* Spalte 4, Zeilen 4-42; Figur 2 *<br>— — — | 1,5,7 | |
| A | FR-A-2 346 594  (PFLIEGER)<br>* Seite 2, Zeilen 4-30; Figur *<br>— — — | 2,6 | |
| A | CH-A-5 191 17  (GLATZ)<br>* Spalte 2, Zeilen 6-10; Figur *<br>— — — | 3 | |
| P,X | DE-U-8 910 801  (SACHS)<br>* Insgesamt *<br>— — — — — | 1-7 | |

|  | RECHERCHIERTE SACHGEBIETE (Int. Cl.5) |
|---|---|
|  | F 16 M<br>F 16 C |

Der vorliegende Recherchenbericht wurde für alle Patentansprüche erstellt

| Recherchenort | Abschlußdatum der Recherche | Prüfer |
|---|---|---|
| Den Haag | 22 November 90 | BARON C. |